# EUROPÄISCHE PATENTANMELDUNG

(11) **EP 4 379 231 A1**
(43) Veröffentlichungstag der Anmeldung: **05.06.2024**
(21) Anmeldenummer: 23203150.0
(22) Anmeldetag: 12.10.2023
(51) Int. Cl.: F16F 7/00, F16F 15/121

(54) **DÄMPFERVORRICHTUNG ZUM REDUZIEREN EINER BEWEGUNG EINES RELATIV ZU EINEM ERSTEN BAUTEIL BEWEGBAREN ZWEITEN BAUTEILS**

(30) Priorität: 10.11.2022 DE 102022129768
(71) Anmelder: Illinois Tool Works Inc., Glenview IL 60025 (US)
(72) Erfinder: BECK, Christian, Glenview, Illinois, 60025 (US)
(74) Vertreter: Meissner Bolte Partnerschaft mbB

(57) **Zusammenfassung**

Die Erfindung betrifft eine Dämpfervorrichtung (1) zum Abdämpfen einer Bewegung eines relativ zu einem ersten Bauteil bewegbaren zweiten Bauteils, wobei die Dämpfervorrichtung (1) eine erste Dämpferkomponente (2), eine zweite Dämpferkomponente (3), welche - zumindest teil- oder bereichsweise - relativ zu der ersten Dämpferkomponente (2) bewegbar ist, und einen Dämpfungsmechanismus aufweist, welcher derart zwischen der ersten und zweiten Dämpferkomponente (2, 3) angeordnet und ausgebildet ist, dass eine Bewegung der zweiten Dämpferkomponente (3) relativ zu der ersten Dämpferkomponente (2) reduziert wird oder reduzierbar ist. Die erfindungsgemäße Dämpfervorrichtung (1) zeichnet sich insbesondere dadurch aus, dass der Dämpfungsmechanismus eine mit der ersten oder zweiten Dämpferkomponente (2; 3) verbundene Lamellen- oder Rippenstruktur (4) mit einer Vielzahl von vorspringenden Bereichen, insbesondere in Gestalt von Lamellen, Rippen oder Noppen, aufweist, die in der Bewegungsrichtung der ersten Dämpferkomponente (2) relativ zu der zweiten Dämpferkomponente (3) zumindest teil- oder bereichsweise elastisch auslenkbar sind, und dass der Dämpfungsmechanismus eine mit der zweiten oder ersten Dämpferkomponente (3; 2) verbundene Kammstruktur (5) mit mindestens einem und vorzugsweise einer Vielzahl von Zähnen oder Vorsprüngen aufweist, wobei der mindestens eine Zahn oder Vorsprung der Kammstruktur (5) zumindest teil- oder bereichsweise kämmend zwischen zwei einander benachbarten vorspringenden Bereichen der Lamellen- oder Rippenstruktur (4) angeordnet ist.

## Beschreibung

Die vorliegende Erfindung betrifft allgemein Bewegungssteuerungsvorrichtungen und insbesondere Dämpfervorrichtungen zum Reduzieren einer Bewegung eines relativ zu einem ersten Bauteil bewegbaren zweiten Bauteils.

In den vergangenen Jahren wurden Dämpfer entwickelt, um eine zueinander relative Bewegung von Bauteilen zu verlangsamen und/oder zu steuern. So sind zum Beispiel Fahrzeuge häufig mit verschiedenen Schwenkanordnungen (zum Beispiel Heckklappen, Frachttüren, Handschuhfächern, Mittelkonsolendeckeln, Motorhauben, etc.) ausgestattet. Die Bauteile von Schwenkanordnungen sind miteinander verbunden, um relativ zueinander zu rotieren, und mit den Bauteilen sind ein oder mehrere Dämpfer verbunden, um ihre Rotationsgeschwindigkeit zu regulieren.

In gleicher Weise sind auch Lineardämpfer bekannt, um eine Linearbeweung zwischen zwei Bauteilen zu reduzieren.

Gewisse bekannte Dämpferanordnungen sind dazu ausgelegt, die Relativbewegung von Bauteilen, die mittels Schwerkraft schwenken, zu dämpfen. Wird ein weiter unten gelegenes Bauteil (zum Beispiel eine Handschuhfachklappe) gelöst, um relativ zu einem weiter oben gelegenen Bauteil (zum Beispiel einem Armaturenbrett) zu schwenken, verlangsamt der Dämpfer die Abwärtsrotation des unteren Bauteils.

Derartige aus dem Stand der Technik bekannte Dämpfervorrichtungen sind häufig als Luftdämpfer oder als Hydraulikdämpfer ausgeführt, bei welchen ein Arbeitsfluid (Luft, Hydraulikflüssigkeit oder Fett) durch eine Blende oder Drossel von einem ersten Arbeitsraum in einen zweiten Arbeitsraum gedrückt wird, infolgedessen eine in den Dämpfer eingeleitete Kraft/Bewegung abgedämpft wird. Auch sind Rotationsdämpfer bekannt, dessen Wirkungsweise auf dem Scherprinzip basiert.

Die bekannten Dämpferanordnungen weisen somit einen relativ komplexen Aufbau auf, bei dem die Dichtigkeit der Arbeitsräume sichergestellt sein muss. Es besteht insbesondere die Gefahr, dass die Systeme nach einiger Zeit undicht werden und somit ihre Dämpfungsfunktion verlieren.

Darüber hinaus weisen Dämpfervorrichtungen, die mit flüssigen Arbeitsmedien, wie beispielsweise mit Ölen, arbeiten, den Nachteil auf, dass das Dämpfungsverhalten häufig temperaturabhängig ist, da bei niedriger Temperatur die Viskosität der Dämpfungsflüssigkeit zunimmt.

Aufgrund der geschilderten Problemstellung liegt der vorliegenden Erfindung die Aufgabe zu Grunde, eine Dämpfervorrichtung zum Dämpfen der Bewegung eines Bauteils anzugeben, welche ein breites Spektrum an Verwendungsmöglichkeiten bietet. Insbesondere besteht ein Bedarf nach Dämpfungsvorrichtungen mit einem einfachen Aufbau, so dass die Dämpfungsvorrichtungen kostengünstig herstell-und montierbar sind, wobei gleichzeitig ein möglichst temperaturunabhängiges Dämpfungsvermögen erzielbar ist.

Diese Aufgabe wird erfindungsgemäß durch eine Dämpfervorrichtung gemäß dem unabhängigen Patentanspruch 1 gelöst, wobei vorteilhafte Weiterbildungen der erfindungsgemäßen Dämpfervorrichtung in den abhängigen Ansprüchen angegeben sind.

Demgemäß betrifft die vorliegende Erfindung insbesondere eine Dämpfervorrichtung zum Reduzieren einer Bewegung eines relativ zu einem ersten Bauteil bewegbaren zweiten Bauteils, wobei die Dämpfervorrichtung eine erste mit dem ersten Bauteil insbesondere fest verbundene oder verbindbare Dämpferkomponente und eine zweite mit dem zweiten Bauteil insbesondere fest verbundene oder verbindbare Dämpferkomponente aufweist, und wobei die zweite Dämpferkomponente zumindest teil- oder bereichsweise relativ zu der ersten Dämpferkomponente bewegbar ist.

Darüber hinaus umfasst die Dämpfervorrichtung einen Dämpfungsmechanismus, welcher derart zwischen der ersten und zweiten Dämpferkomponente angeordnet und ausgebildet ist, dass eine Bewegung der zweiten Dämpferkomponente relativ zu der ersten Dämpferkomponente reduziert (abgedämpft) wird oder reduzierbar (abdämpfbar) ist.

Erfindungsgemäß ist insbesondere vorgesehen, dass der Dämpfungsmechanismus eine mit der ersten oder zweiten Dämpferkomponente verbundene Lamellen- oder Rippenstruktur mit einer Vielzahl von vorspringenden Bereichen, beispielsweise Lamellen, Finger, Noppen und/oder Rippen, aufweist, die in der Bewegungsrichtung der ersten Dämpferkomponente relativ zu der zweiten Dämpferkomponente zumindest teil- oder bereichsweise elastisch auslenkbar sind.

Zusätzlich weist der Dämpfungsmechanismus eine mit der zweiten oder ersten Dämpferkomponente verbundene Kammstruktur mit mindestens einem und vorzugsweise mit mindestens einer Vielzahl von Zähnen oder Vorsprüngen auf, wobei zumindest in einem Zustand, in welchem die zweite Dämpferkomponente nicht relativ zu der ersten Dämpferkomponente bewegt wird, der mindestens eine Zahn oder Vorsprung der Kammstruktur zumindest teil- oder bereichsweise kämmend zwischen zwei einander benachbarten vorspringenden Bereichen der Lamellen- oder Rippenstruktur angeordnet ist.

Die mit der erfindungsgemäßen Dämpfervorrichtung erzielbaren Vorteile liegen auf der Hand: dadurch, dass die Funktionsweise des Dämpfungsmechanismus nicht auf der Verdrängung eines Arbeitsfluids, insbesondere einer Hydraulikflüssigkeit (Öl), oder auf einem Gas, insbesondere Luft, basiert, ist in konstruktiver Hinsicht der Dämpfungsmechanismus wesentlich einfacher realisierbar, wobei gleichzeitig in einer besonders effizienten Weise eine Dämpfungscharakteristik der Dämpfervorrichtung insbesondere individuell, d.h. anwenderspezifisch, einstellbar ist.

Darüber hinaus ist die Dämpfungscharakteristik der Dämpfervorrichtung weitestgehend unabhängig von Umgebungsbedingungen, insbesondere der Temperatur.

Gemäß bevorzugten Realisierungen der erfindungsgemäßen Dämpfervorrichtung ist in diesem Zusammenhang vorgesehen, dass der mindestens eine Zahn oder Vorsprung der Kammstruktur derart zwischen zwei einander bewegbaren vorspringenden Bereichen der Lamellen- oder Rippenstruktur angeordnet und/oder ausgebildet ist, dass bei einer Bewegung der ersten oder zweiten Dämpferkomponente relativ zu der zweiten oder ersten Dämpferkomponente mit Hilfe des mindestens einen Zahns oder Vorsprungs der Kammstruktur zumindest ein Teil der vorspringenden Bereiche der Lamellen- oder Rippenstruktur unter gleichzeitiger Umwandlung von Bewegungsenergie in Verformungsarbeit elastisch verformt wird.

Mit anderen Worten, der Dämpfungsmechanismus beruht auf einer Funktionsweise, bei welcher zumindest ein Teil der eingeleiteten kinetischen Energie durch elastische Verformung in Wärmeenergie umgewandelt wird. Vorzugsweise sind dabei die vorspringenden Bereiche der Lamellen- oder Rippenstruktur aus einem elastischen Material, insbesondere Kunststoffmaterial, gebildet, dessen Elastizität über einen möglichst weiten Temperaturbereich nur geringfügig variiert.

Alternativ oder zusätzlich hierzu ist es bevorzugt, dass der mindestens eine Zahn oder Vorsprung der Kammstruktur aus einem relativ zu dem Material der vorspringenden Bereiche der Lamellen- oder Rippenstruktur härteren Material, insbesondere Kunststoffmaterial, gebildet ist.

Gemäß einem (weiteren) Aspekt zeichnet sich die erfindungsgemäße Lösung insbesondere dadurch aus, dass die vorspringenden Bereiche der Lamellen- oder Rippenstruktur eine - im Querschnitt der vorspringenden Bereiche gesehen - sich in Richtung der Kammstruktur zumindest teil- oder bereichsweise verjüngende, insbesondere konisch verjüngende, Geometrie aufweisen.

Alternativ oder zusätzlich hierzu kann gemäß dem weiteren Aspekt der Erfindung vorgesehen sein, dass der mindestens eine Zahn oder Vorsprung der Kammstruktur eine sich - im Querschnitt des mindestens einen Zahns oder Vorsprungs gesehen - in Richtung der Lamellen- oder Rippenstruktur zumindest teil- oder bereichsweise verjüngende, insbesondere konisch verjüngende, Geometrie aufweist.

Mit dieser Maßnahme ist sichergestellt, dass die vorspringenden Bereiche der Lamellen- oder Rippenstruktur einseitig auf den mindestens einen Zahn oder Vorsprung der Kammstruktur auftreffen, wodurch eine harmonische Kraftübertragung realisiert wird.

Insbesondere ist in diesem Zusammenhang gemäß Ausführungsvarianten der erfindungsgemäßen Dämpfervorrichtung vorgesehen, dass der mindestens eine Zahn oder Vorsprung der Kammstruktur eine Formgebung aufweist, die zumindest bereichsweise zumindest im Wesentlichen komplementär zu der Formgebung der vorspringenden Bereiche der Lamellen- oder Rippenstruktur ist.

Hierbei handelt es sich um eine einfach zu realisierende aber dennoch effektive Maßnahme, um eine harmonische Kraftübertragung zwischen der Kammstruktur und der Lamellen- oder Rippenstruktur sicherzustellen. Eine derartige harmonische Kraftübertragung impliziert einen homogenen Kraftverlauf und eine flache Kraftamplitude, infolgedessen auch etwaige Geräuschentwicklungen beim Ansprechen des Dämpfungsmechanismus verhindert oder zumindest reduziert werden können.

Gemäß bevorzugten Realisierungen der erfindungsgemäßen Dämpfervorrichtung ist vorgesehen, dass die Lamellen- oder Rippenstruktur einen mit der ersten oder zweiten Dämpferkomponente insbesondere fest verbundenen oder verbindbaren Lamellen- oder Rippenträger sowie die vorspringenden Bereiche aufweist, die mit dem Lamellen- oder Rippenträger verbunden sind.

Hierbei bietet es sich an, dass der Lamellen- oder Rippenträger aus einem relativ zu dem Material der vorspringenden Bereiche härteren Material, insbesondere Kunststoffmaterial, gebildet ist. Vorzugsweise ist die Lamellen- oder Rippenstruktur im Rahmen eines 2K-Kunststoffspritzgussprozesses gebildet.

Dies reduziert weiter den Herstellungsaufwand der erfindungsgemäßen Dämpfervorrichtung.

Gemäß Ausführungsvarianten der erfindungsgemäßen Dämpfervorrichtung ist vorgesehen, dass sich zumindest ein Teil der die vorspringenden Bereiche der Lamellen- oder Rippenstruktur im unbelasteten Zustand, insbesondere also in einem Zustand, in welchem die zweite Dämpferkomponente nicht relativ zu der ersten Dämpferkomponente bewegt wird, zumindest im Wesentlichen in eine Richtung erstreckt, welche zumindest im Wesentlichen senkrecht zu der Bewegungsrichtung der zweiten Dämpferkomponente relativ zu der ersten Dämpferkomponente verläuft.

Alternativ oder zusätzlich hierzu kann vorgesehen sein, dass sich der mindestens eine Zahn oder Vorsprung der Kammstruktur zumindest im Wesentlichen in eine Richtung erstreckt, welche zumindest im Wesentlichen senkrecht zu der Bewegungsrichtung der zweiten Dämpferkomponente relativ zu der ersten Dämpferkomponente verläuft.

Um eine unterschiedliche und insbesondere richtungsabhängige Dämpfercharakteristik zu erzeugen, ist es denkbar, dass sich zumindest ein Teil der vorspringenden Bereiche der Lamellen- oder Rippenstruktur im unbelasteten Zustand, insbesondere also in einem Zustand, in welchem die zweite Dämpferkomponente nicht relativ zu der ersten Dämpferkomponente bewegt wird, zumindest im Wesentlichen in eine Richtung erstreckt, welche im Hinblick auf eine Richtung, die senkrecht zu der Bewegungsrichtung der zweiten Dämpferkomponente relativ zu der ersten Dämpferkomponente verläuft, zumindest im Wesentlichen schräg verläuft.

Hierbei sollte sich vorzugsweise der mindestens eine Zahn oder Vorsprung der Kammstruktur zumindest im Wesentlichen in eine Richtung erstrecken, welche zumindest im Wesentlichen senkrecht zu der Bewegungsrichtung der zweiten Dämpferkomponente relativ zu der ersten Dämpferkomponente verläuft.

Selbstverständlich ist es aber auch denkbar, dass der mindestens eine Zahn oder Vorsprung der Kammstruktur schräg verlaufend angeordnet ist.

Die Dämpfungscharakteristik der Dämpfervorrichtung lässt sich in einer besonders einfachen aber dennoch effektiven Weise insbesondere anwendungsspezifisch einstellen, indem die Anzahl der Zähne oder Vorsprünge der Kammstruktur sowie die Anzahl der Rippen oder Lamellen der Lamellen- oder Rippenstruktur variiert werden.

Gemäß bevorzugten Ausführungsvarianten der erfindungsgemäßen Dämpfervorrichtung ist in diesem Zusammenhang vorgesehen, dass die Kammstruktur derart ausgeführt ist, dass zwischen zwei benachbarten Zähnen oder Vorsprüngen der Kammstruktur mehrere vorspringende Bereiche der Lamellen- oder Rippenstruktur angeordnet sind.

Insbesondere ist es in diesem Zusammenhang auch denkbar, dass eine Anzahl der vorspringenden Bereiche der Lamellen- oder Rippenstruktur zwischen zwei benachbarten Zähnen oder Vorsprüngen der Kammstruktur oder eine Anzahl der Zähne oder Vorsprünge der Kammstruktur zwischen zwei benachbarten vorspringenden Bereiche der Lamellen- oder Rippenstruktur variiert.

Mit dieser Maßnahme ist in einer leicht zu realisierenden aber dennoch effektiven Weise möglich, dass bei Belastung bzw. beim Betrieb der Dämpfervorrichtung eine bleibende Verformung der elastisch verformbaren vorspringenden Bereiche der Lamellen- oder Rippenstruktur vermieden wird, wobei gleichzeitig alle elastisch verformbaren vorspringenden Bereiche der Lamellen- oder Rippenstruktur gleichzeitig und gleichmäßig belastet werden.

Eine weitere Besonderheit der erfindungsgemäßen Dämpfervorrichtung ist darin zu sehen, dass die erste und/oder zweite Dämpferkomponente modular aufgebaut sind/ist.

Die Modularität des Aufbaus ist insbesondere darin zu sehen, dass die Lamellen-oder Rippenstruktur und/oder die Kammstruktur bedarfsweise und insbesondere zum Variieren eines Ansprechverhaltens und/oder eines Dämpfungsfaktors der Dämpfervorrichtung auswechselbar sind/ist.

Dies hat den entscheidenden Vorteil, dass die Dämpfervorrichtung in besonders einfacher Weise an spezielle Anwendungen angepasst werden kann, und zwar indem einfach die Lamellen- oder Rippenstruktur und/oder die Kammstruktur ausgetauscht werden/wird.

Gemäß denkbaren Realisierungen der Dämpfervorrichtung ist diese als Rotationsdämpfer ausgeführt.

Dabei ist insbesondere vorgesehen, dass die erste Dämpferkomponente als ein Gehäuseteil mit einem im Querschnitt zumindest im Wesentlichen kreiszylinderförmigen inneren Muldenbereich ausgeführt ist. Das Gehäuseteil mit dem inneren Muldenbereich dient dabei als Lamellen- oder Rippenträger, mit oder an welchem die vorspringenden Bereiche der Lamellen- oder Rippenstruktur verbunden oder ausgebildet sind.

In diesem Zusammenhang ist es insbesondere denkbar, dass die zweite Dämpferkomponente der Dämpfervorrichtung ein im Querschnitt zumindest im Wesentlichen kreiszylinderförmiges Trägerteil aufweist, welches die Kammstruktur mit dem mindestens einen Zahn oder Vorsprung ausbildet und zumindest teil-oder bereichsweise in dem inneren Muldenbereich der ersten Dämpferkomponente derart vorzugsweise austauschbar aufgenommen ist, dass das Trägerteil mit der Kammstruktur relativ zu der ersten Dämpferkomponente verdrehbar ist, während der mindestens eine Zahn oder Vorsprung der Kammstruktur zumindest teil- und/oder bereichsweise kämmend zwischen zwei einander benachbarten vorspringenden Bereiche der Lamellen- oder Rippenstruktur angeordnet ist.

Alternativ hierzu ist es denkbar, dass die wobei die Dämpfervorrichtung als Rotationsdämpfer ausgeführt ist, bei welcher die erste Dämpferkomponente als ein Gehäuseteil mit einem im Querschnitt zumindest im Wesentlichen kreiszylinderförmigen inneren Muldenbereich ausgeführt ist, wobei das Gehäuseteil mit dem inneren Muldenbereich als Trägerteil dient, welches die Kammstruktur mit dem mindestens einen Zahn oder Vorsprung ausbildet, wobei die zweite Dämpferkomponente einen im Querschnitt zumindest im Wesentlichen kreiszylinderförmigen Lamellen- oder Rippenträger aufweist, mit oder an welchem die vorspringenden Bereiche der Lamellen- oder Rippenstruktur verbunden oder ausgebildet sind, wobei der kreiszylinderförmiger Lamellen- oder Rippenträger mit der Lamellen- oder Rippenstruktur zumindest teil- oder bereichsweise in dem inneren Muldenbereich der ersten Dämpferkomponente derart vorzugsweise austauschbar aufgenommen ist, dass das Trägerteil mit der Kammstruktur relativ zu der ersten Dämpferkomponente verdrehbar ist, während der mindestens eine Zahn oder Vorsprung der Kammstruktur zumindest teil- und/oder bereichsweise kämmend zwischen zwei einander benachbarten vorspringenden Bereichen der Lamellen- oder Rippenstruktur angeordnet ist.

In diesem Zusammenhang bietet es sich an, dass die erste Dämpferkomponente einen kreisförmigen Ringbereich aufweist, welcher derart in dem kreiszylinderförmigen inneren Muldenbereich ausgebildet ist, dass der innere Muldenbereich in einen äußeren Ringkanal und einen hiervon über den Ringbereich getrennten im Querschnitt kreisförmigen Bereich aufgeteilt ist, wobei die Zähne oder Vorsprünge der Kammstruktur an der den äußeren Ringkanal begrenzenden Wandung und an der nach Innen zeigenden Wandung des Ringbereichs ausgebildet sind, und wobei die zweite Dämpferkomponente ferner einen ringförmigen Lamellen- oder Rippenträger aufweist, welcher derart komplementär zu dem äußeren Ringkanal der ersten Dämpferkomponente ausgeführt ist, dass der ringförmige Lamellen- oder Rippenträger zumindest teil-oder bereichsweise in dem äußeren Ringkanal der ersten Dämpferkomponente aufnehmbar ist, wobei beidseitig mit oder an dem ringförmigen Lamellen- oder Rippenträger vorspringende Bereiche der Lamellen- oder Rippenstruktur verbunden oder ausgebildet sind.

Alternativ hierzu ist es aber auch denkbar, dass die Dämpfervorrichtung als Lineardämpfer ausgeführt ist.

Zur Realisierung eines solchen Lineardämpfers bietet es sich an, dass die erste Dämpferkomponente der Dämpfervorrichtung als ein zylinderförmiges Gehäuseteil mit einem im Querschnitt zumindest im Wesentlichen kreiszylinderförmigen Hohlraum ausgeführt ist, wobei das Gehäuseteil mit dem Hohlraum als Lamellen-oder Rippenträger dient, mit oder an welchem die vorspringenden Bereiche der Lamellen- oder Rippenstruktur verbunden oder ausgebildet sind.

In diesem Zusammenhang bietet es sich an, dass die zweite Dämpferkomponente der Dämpfervorrichtung einen in den Hohlraum des zylinderförmigen Gehäuses zumindest teil- oder bereichsweise eintauchenden Kolben aufweist, welcher eine Kolbenstange mit einem ersten Endbereich aufweist, an welchem ein im Querschnitt zumindest im Wesentlichen kreiszylinderförmiges Trägerteil mit der Kammstruktur angeordnet oder ausgebildet ist.

Dabei sollte der Kolben mit dem Trägerteil und der Kammstruktur in Längsrichtung des zylinderförmigen Gehäuses relativ zu dem zylinderförmigen Gehäuseteil verschiebbar sein, während der mindestens eine Zahn oder Vorsprung der Kammstruktur zumindest teil- und/oder bereichsweise kämmend zwischen zwei einander benachbarten vorspringenden Bereichen der Lamellen-oder Rippenstruktur angeordnet ist.

Gemäß Weiterbildungen der zuletzt genannten Ausführungsform, bei welcher die Dämpfervorrichtung als Lineardämpfer ausgeführt ist, ist vorgesehen, dass der mindestens eine Zahn oder Vorsprung der Kammstruktur als eine zumindest teil-oder bereichsweise auf der Mantelfläche des kreiszylinderförmigen Trägerteils ausgebildete schraubenförmige Struktur, insbesondere Helix-Struktur, ausgeführt ist. Selbstverständlich kommen aber auch andere Ausführungsformen zur Ausgestaltung der Kammstruktur in Frage.

Gemäß einer weiteren, alternativen Ausführungsvariante der erfindungsgemäßen Dämpfervorrichtung ist diese als Lineardämpfer ausgeführt, bei welcher die erste Dämpferkomponente zwei einander gegenüberliegende Lamellen- oder Rippenträger aufweist, welche ausgeführt sind, für ein stabförmiges Trägerteil der zweiten Dämpferkomponente eine vorzugsweise formschlüssige und noch bevorzugter zumindest teil- oder bereichsweise formschlüssige, eine Translation des stabförmigen Trägerteils erlaubende Gleitführung auszubilden.

Hierbei ist bevorzugt vorgesehen, dass jeder Lamellen- oder Rippenträger der ersten Dämpferkomponente eine Lamellen- oder Rippenstruktur mit einer Vielzahl von vorspringenden Bereichen aufweist. Andererseits sollte das stabförmige Trägerteil der zweiten Dämpferkomponente eine Kammstruktur mit einer Vielzahl von Zähnen oder Vorsprüngen aufweisen, die an einander gegenüberliegenden Seitenflächen des stabförmigen Trägerteils derart angeordnet sind, dass bei einer Bewegung des stabförmigen Trägerteils durch die Gleitführung die Zähne oder Vorsprünge unter gleichzeitiger elastischer Auslenkung der vorspringenden Bereiche diese insbesondere kämmend passieren.

Gemäß einer Weiterbildung der zuletzt genannten Ausführungsvariante der erfindungsgemäßen Dämpfervorrichtung ist vorgesehen, dass ein Abstand zwischen den beiden einander gegenüberliegenden Lamellen- oder Rippenträgern vorzugsweise variabel einstellbar ist, um so einen Dämpfungsfaktor der Dämpfervorrichtung einzustellen.

Insbesondere ist es in diesem Zusammenhang denkbar, dass die beiden einander gegenüberliegenden Lamellen- oder Rippenträger mit Hilfe eines Federelements oder mit Hilfe von Federelementen in einem vorgespannten Zustand vorliegen. In gleicher Weise ist eine Freilauf-Funktion der als Lineardämpfer ausgebildeten Dämpfervorrichtung realisierbar.

Alternativ oder zusätzlich hierzu ist es denkbar, dass mindestens einer der beiden einander gegenüberliegenden Lamellen- oder Rippenträger über eine sich schräg zur Bewegungsrichtung des stabförmigen Trägerteils verlaufende Führung relativ zu dem stabförmigen Trägerteil verschiebbar gelagert ist, und zwar insbesondere derart, dass bei einer Bewegung des stabförmigen Trägerteils in einer ersten Richtung durch die Gleitführung der mindestens eine Lamellen- oder Rippenträger in einer ersten Position vorliegt, und dass bei einer Bewegung des stabförmigen Trägerteils in einer zur ersten Richtung entgegengesetzten zweiten Richtung durch die Gleitführung der mindestens eine Lamellen- oder Rippenträger in eine zweite Position verschoben wird und/oder vorliegt, wobei in der zweiten Position des mindestens einen Lamellen- oder Rippenträgers ein Abstand zwischen den beiden einander gegenüberliegenden Lamellen- oder Rippenträgern größer ist als in der ersten Position des mindestens einen Lamellen- oder Rippenträgers. Der Abstand zwischen den beiden einander gegenüberliegenden Lamellen- oder Rippenträgern in der zweiten Position kann insbesondere so gewählt sein, dass ein Freilauf des stabförmigen Trägerteils durch die Gleitführung möglich ist.

Die Erfindung betrifft ferner die Verwendung der zuvor genannten Dämpfervorrichtung als Bewegungssteuerungsvorrichtung zum Reduzieren einer Bewegung eines relativ zu einem ersten Bauteil bewegbaren zweiten Bauteils.

Darüber hinaus betrifft die Erfindung eine Fahrzeugkomponente, insbesondere Innenraum-Fahrzeugkomponente, welche zwei relativ zueinander bewegbare Bauteile aufweist, wobei eine Relativbewegung dieser Bauteile mit Hilfe einer zuvor genannten Art abgedämpft bzw. reduziert wird.

Nachfolgend werden unter Bezugnahme auf die beiliegenden Zeichnungen exemplarische Ausführungsformen der erfindungsgemäßen Dämpfervorrichtung beschrieben.

Es zeigen:
- FIG. 1: schematisch und in einer Draufsicht eine erste exemplarische Ausführungsform der erfindungsgemäßen Dämpfervorrichtung im geöffneten Zustand, wobei die Dämpfervorrichtung als Rotationsdämpfer ausgeführt ist;
- FIG. 2: schematisch und in einer isometrischen Ansicht die erste Dämpferkomponente der ersten exemplarischen Ausführungsform der erfindungsgemäßen Dämpfervorrichtung gemäß FIG. 1;
- FIG. 3: schematisch und in einer isometrischen Ansicht die zweite Dämpferkomponente der ersten exemplarischen Ausführungsform der erfindungsgemäßen Dämpfervorrichtung gemäß FIG. 1;
- FIG. 4: schematisch eine isometrische Ansicht einer zweiten exemplarischen Ausführungsform der erfindungsgemäßen Dämpfervorrichtung im geöffneten Zustand, wobei die Dämpfervorrichtung als Rotationsdämpfer ausgeführt ist;
- FIG. 5: schematisch eine isometrische Ansicht der ersten Dämpferkomponente der zweiten exemplarischen Ausführungsform der erfindungsgemäßen Dämpfervorrichtung gemäß FIG. 4;
- FIG. 6: schematisch eine isometrische Ansicht der zweiten Dämpferkomponente der zweiten exemplarischen Ausführungsform der erfindungsgemäßen Dämpfervorrichtung gemäß FIG. 4;
- FIG. 7: schematisch und in einer isometrischen Ansicht eine dritte exemplarische Ausführungsform der erfindungsgemäßen Dämpfervorrichtung, welche als Lineardämpfer ausgeführt ist;
- FIG. 8: schematisch eine isometrische Ansicht der zweiten Dämpferkomponente der dritten exemplarischen Ausführungsform der erfindungsgemäßen Dämpfervorrichtung gemäß FIG. 7;
- FIG. 9: schematisch und in einer isometrischen Ansicht eine vierte exemplarische Ausführungsform der erfindungsgemäßen Dämpfervorrichtung, welche als Lineardämpfer ausgeführt ist;
- FIG. 10: schematisch eine isometrische Ansicht der vierten exemplarischen Ausführungsform der erfindungsgemäßen Dämpfervorrichtung im geöffneten Zustand;
- FIG. 11: schematisch eine isometrische Ansicht der ersten Dämpferkomponente der vierten exemplarischen Ausführungsform der erfindungsgemäßen Dämpfervorrichtung gemäß FIG. 9; und
- FIG. 12: schematisch eine isometrische Ansicht der zweiten Dämpferkomponente der vierten exemplarischen Ausführungsform der erfindungsgemäßen Dämpfervorrichtung gemäß FIG. 9.

Die in den Zeichnungen gezeigten exemplarischen Ausführungsformen der erfindungsgemäßen Dämpfervorrichtung 1 betreffen Bewegungssteuerungsvorrichtungen zum Steuern und insbesondere Reduzieren einer Bewegung eines relativ zu einem ersten Bauteil bewegbaren zweiten Bauteils. In den Zeichnungen sind das erste Bauteil und das zweite Bauteil nicht dargestellt.

Die Ausführungsbeispiele der erfindungsgemäßen Dämpfervorrichtung 1 weisen jeweils eine erste, mit dem (in den Zeichnungen nicht gezeigten) ersten Bauteil insbesondere fest verbundene oder verbindbare Dämpferkomponente 2 sowie eine zweite, mit dem (in den Zeichnungen nicht gezeigten) zweiten Bauteil insbesondere fest verbundene oder verbindbare Dämpferkomponente 3 auf. Dabei ist die zweite Dämpferkomponente 3 - zumindest teil- oder bereichsweise - relativ zu der ersten Dämpferkomponente 2 bewegbar.

Darüber hinaus ist bei den in den Zeichnungen gezeigten Ausführungsbeispielen jeweils ein Dämpfungsmechanismus vorgesehen, welcher derart zwischen der ersten und zweiten Dämpferkomponente 2, 3 angeordnet und ausgebildet ist, dass eine Bewegung der zweiten Dämpferkomponente 3 relativ zu der ersten Dämpferkomponente 2 abgedämpft oder abdämpfbar ist.

Der Dämpfungsmechanismus, welcher bei den in den Zeichnungen schematisch gezeigten exemplarischen Ausführungsformen der erfindungsgemäßen Dämpfervorrichtung 1 zum Einsatz kommt, zeichnet sich insbesondere dadurch aus, dass dieser konstruktiv einfach aufgebaut ist und insbesondere, dass die Funktionsweise des Dämpfungsmechanismus nicht auf einer zum Reduzieren einer Bewegung bewirkten Verdrängung von einem Fluid beruht.

Dadurch kann der Aufbau der Dämpfervorrichtung 1 signifikant vereinfacht werden, da es nicht auf eine geeignete Abdichtung von entsprechenden Arbeitsräumen für das Arbeitsfluid ankommt.

Vielmehr ist bei den in den Zeichnungen gezeigten exemplarischen Ausführungsformen der erfindungsgemäßen Dämpfervorrichtung 1 vorgesehen, dass der Dämpfungsmechanismus eine mit der ersten oder zweiten Dämpferkomponente 2, 3 verbundene Lamellen- oder Rippenstruktur 4 mit einer Vielzahl von vorspringenden Bereichen hier in Gestalt von Lamellen oder Rippen aufweist. Die Lamellen oder Rippen der Lamellen- oder Rippenstruktur 4 der ersten oder zweiten Dämpferkomponente 2, 3 sind relativ zu der zweiten oder ersten Dämpferkomponente 3, 2 zumindest teil- oder bereichsweise elastisch auslenkbar.

Der bei den in den Zeichnungen gezeigten exemplarischen Ausführungsformen der erfindungsgemäßen Dämpfervorrichtung 1 zum Einsatz kommende Dämpfungsmechanismus zeichnet sich ferner dadurch aus, dass der Dämpfungsmechanismus eine Kammstruktur mit mindestens einem Zahn oder Vorsprung aufweist, die der Dämpferkomponente 2, 3 zugeordnet ist, welche nicht mit der Lamellen- oder Rippenstruktur 4 versehen ist. Dabei ist vorgesehen, dass in einem Zustand, in welchem die zweite Dämpferkomponente 3 nicht relativ zu der ersten Dämpferkomponente 2 bewegt wird, der mindestens eine Zahn oder Vorsprung der Kammstruktur 5 zumindest teil- oder bereichsweise kämmend zwischen zwei einander benachbarten Lamellen oder Rippen der Lamellen- oder Rippenstruktur 4 angeordnet ist.

Den in den Zeichnungen gezeigten exemplarischen Ausführungsformen der erfindungsgemäßen Dämpfervorrichtung 1 ist zu entnehmen, dass sich die Lamellen oder Rippen der Lamellen- oder Rippenstruktur 4 eine - im Querschnitt der Lamellen oder Rippen gesehen - in Richtung der Kammstruktur 5 zumindest teil- oder bereichsweise verjüngende, insbesondere konisch verjüngende, Geometrie aufweisen können.

Denkbar in diesem Zusammenhang ist es diesbezüglich zusätzlich oder alternativ möglich, dass der mindestens eine Zahn oder Vorsprung der Kammstruktur 5 eine - im Querschnitt des mindestens einen Zahns oder Vorsprungs gesehen - sich in Richtung der Lamellen- oder Rippenstruktur 4 zumindest teil- oder bereichsweise verjüngende, insbesondere konisch verjüngende, Geometrie aufweist.

Die in den Zeichnungen gezeigten exemplarischen Ausführungsformen der erfindungsgemäßen Dämpfervorrichtung 1 weisen einen modularen Aufbau auf, bei welchem die erste und zweite Dämpferkomponente 3 insgesamt ein Gehäuse ausbilden. Die erste und zweite Dämpferkomponente 3 können mit Hilfe einer ClipsVerbindung miteinander verbunden, insbesondere verrastet werden.

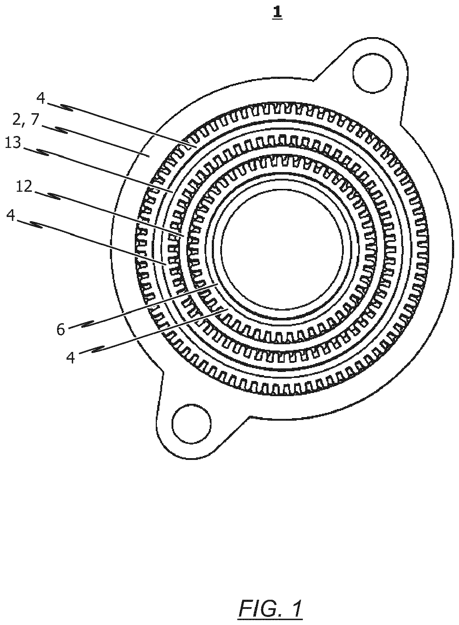

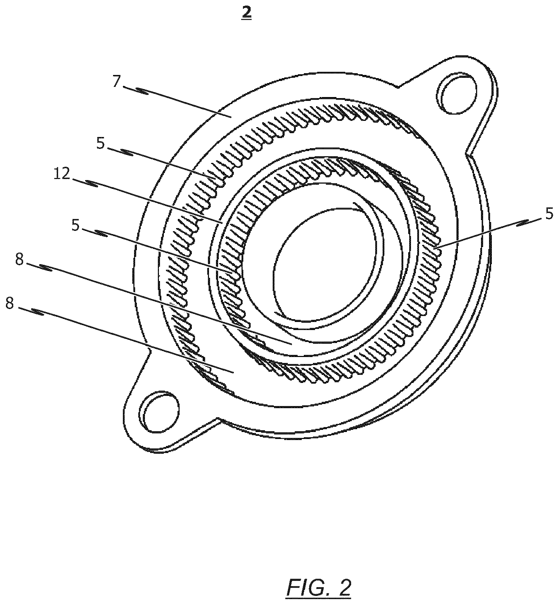

Die in FIG. 1 bis FIG. 3 schematisch gezeigte Ausführungsform der erfindungsgemäßen Dämpfervorrichtung 1 zeichnet sich insbesondere dadurch aus, dass die erste Dämpferkomponente 2 als ein Gehäuseteil mit einem im Querschnitt zumindest im Wesentlichen kreiszylinderförmigen inneren Napf- oder Muldenbereich 8 ausgeführt ist. Das Gehäuseteil mit dem inneren Napf- oder Muldenbereich 8 dient als Trägerteil 7, welches die Kammstruktur 5 mit den Zähnen oder Vorsprüngen ausbildet.

Darüber hinaus weist die erste Dämpferkomponente 2 einen kreisförmigen Ringbereich 12 auf, welcher derart in dem kreiszylinderförmigen inneren Napf- oder Muldenbereich 8 ausgebildet ist, dass der inneren Napf- bzw. Muldenbereich in einen äußeren Ringkanal und einen hiervon über den Ringbereich 12 getrennten im Querschnitt kreisförmigen Bereich aufgeteilt ist. Dabei sind Zähne oder Vorsprünge der Kammstruktur 5 an der den äußeren Ringkanal begrenzenden Wandung und an der nach innen zeigenden Wandung des Ringbereichs ausgebildet.

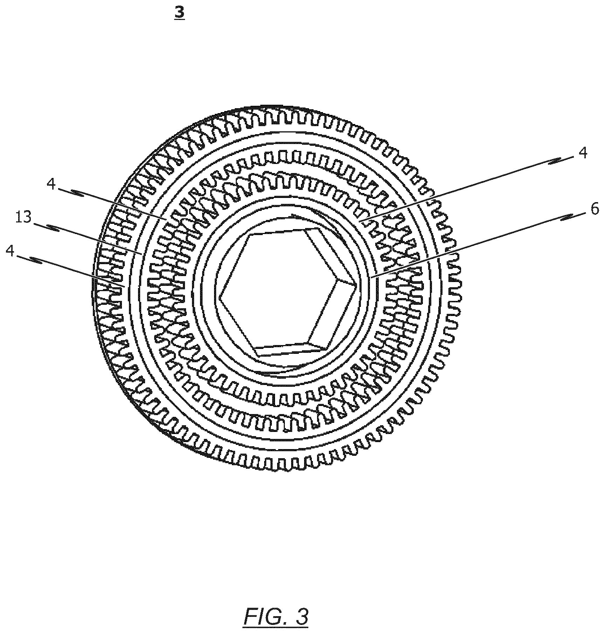

Die zweite Dämpferkomponente 3 (vgl. FIG. 3) weist einen im Querschnitt zumindest im Wesentlichen kreiszylinderförmigen Lamellen- oder Rippenträger 6 auf, mit oder an welchem Lamellen oder Rippen der Lamellen- oder Rippenstruktur 4 verbunden oder ausgebildet sind, wobei der kreiszylinderförmige Lamellen- oder Rippenträger 6 mit der Lamellen- oder Rippenstruktur 4 zumindest teil- oder bereichsweise in dem inneren Muldenbereich 8 der ersten Dämpferkomponente 2 derart vorzugsweise austauschbar aufgenommen ist, dass die zweite Dämpferkomponente 3 mit der Lamellen- oder Rippenstruktur 4 relativ zu der ersten Dämpferkomponente 2 verdrehbar ist, während der Zahn oder Vorsprung der Kammstruktur 5 zumindest teil- und/oder bereichsweise kämmend zwischen zwei einander benachbarten Lamellen oder Rippen der Lamellen- oder Rippenstruktur 4 angeordnet ist.

Die zweite Dämpferkomponente 3 weist ferner einen ringförmigen Lamellen- oder Rippenträger 13 auf, welcher derart komplementär zu dem äußeren Ringkanal der ersten Dämpferkomponente 2 ausgeführt ist, dass der ringförmige Lamellen- oder Rippenträger 13 zumindest teil- oder bereichsweise in dem äußeren Ringkanal der ersten Dämpferkomponente 2 aufnehmbar ist, wobei beidseitig mit oder an dem ringförmigen Lamellen- oder Rippenträger 6 Lamellen oder Rippen der Lamellen-oder Rippenstruktur 4 verbunden oder ausgebildet sind.

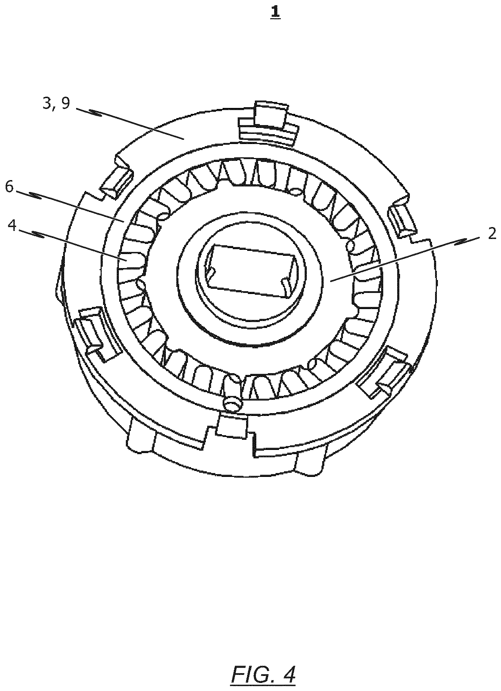

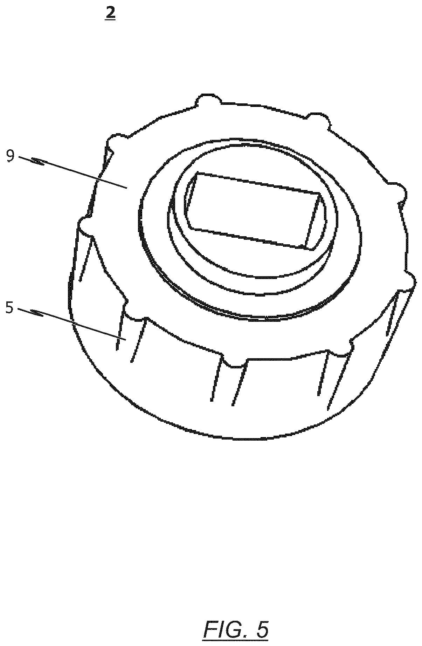

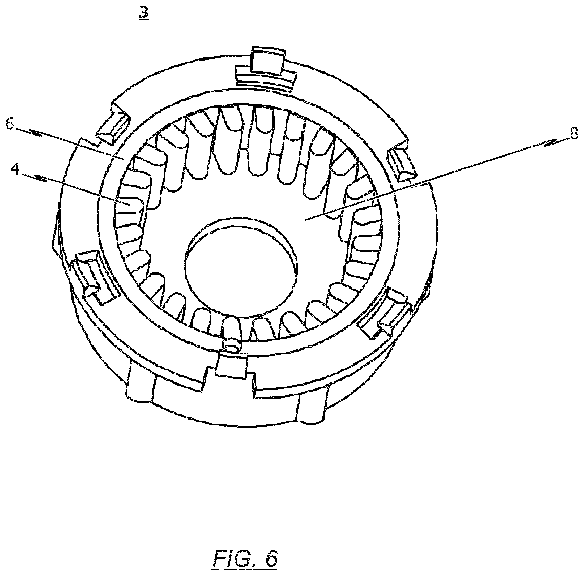

Auch ist bei der zweiten exemplarischen Ausführungsform der erfindungsgemäßen Dämpfervorrichtung 1, die schematisch in FIG. 4 bis FIG. 6 dargestellt ist, vorgesehen, dass diese Dämpfervorrichtung 1 als Rotationsdämpfer ausgeführt ist.

Dabei ist die zweite Dämpferkomponente 3 der Dämpfervorrichtung 1 als ein Gehäuseteil mit einem im Querschnitt zumindest im Wesentlichen kreiszylinderförmigen inneren Muldenbereich 8 ausgeführt. Das Gehäuseteil mit dem inneren Muldenbereich 8 dient dabei als Lamellen- oder Rippenträger 6, mit oder an welchem die Lamellen oder Rippen der Lamellen- oder Rippenstruktur 4 verbunden oder ausgebildet sind.

Ferner ist bei der zweiten exemplarischen Ausführungsform gemäß FIG. 4 bis FIG. 6 vorgesehen, dass die erste Dämpferkomponente 2 ein im Querschnitt zumindest im Wesentlichen kreiszylinderförmiges Trägerteil 9 aufweist, welches die Kammstruktur 5 mit dem mindestens einen Zahn oder Vorsprung ausbildet, und welches zumindest teil- oder bereichsweise in dem inneren Muldenbereich 8 der zweiten Dämpferkomponente 3 derart vorzugsweise austauschbar aufgenommen ist, dass das Trägerteil 9 mit der Kammstruktur 5 relativ zu der zweiten Dämpferkomponente 3 verdrehbar ist, während der mindestens eine Zahn oder Vorsprung der Kammstruktur 5 zumindest teil- und/oder bereichsweise kämmend zwischen zwei einander benachbarten Lamellen oder Rippen der Lamellen- oder Rippenstruktur 4 angeordnet ist.

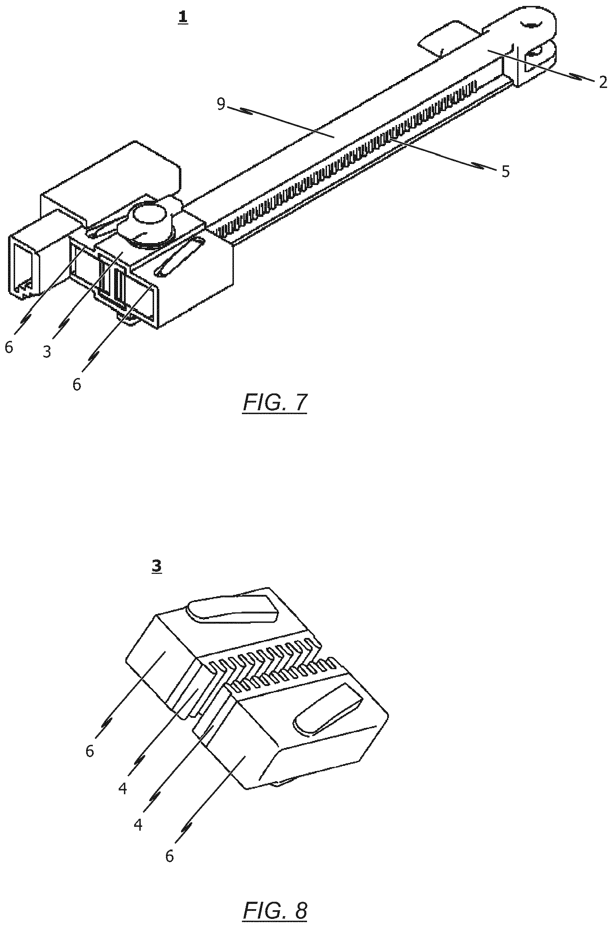

Bei der in FIG. 7 und FIG. 8 schematisch gezeigten exemplarischen Ausführungsform der erfindungsgemäßen Dämpfervorrichtung 1 ist vorgesehen, dass die Dämpfervorrichtung 1 als Lineardämpfer ausgeführt ist.

Dabei weist die zweite Dämpferkomponente 3 zwei einander gegenüberliegende Lamellen- oder Rippenträger 6 auf, welche ausgeführt sind, für ein stabförmiges Trägerteil 9 der ersten Dämpferkomponente 2 eine vorzugsweise formschlüssige und noch bevorzugter zumindest teil- oder bereichsweise formschlüssige, eine Translation des Trägerteils erlaubende Gleitführung auszubilden, wobei jeder Lamellen- oder Rippenträger 6 der zweiten Dämpferkomponente 3 eine Lamellen-oder Rippenstruktur 4 mit einer Vielzahl von Lamellen oder Rippen aufweist.

Andererseits ist bei der in FIG. 7 und FIG. 8 gezeigten exemplarischen Ausführungsform der erfindungsgemäßen Dämpfervorrichtung 1 vorgesehen, dass das stabförmige Trägerteil 9 der ersten Dämpferkomponente 2 eine Kammstruktur 5 mit einer Vielzahl von Zähnen oder Vorsprüngen aufweist, die an einander gegenüberliegenden Seitenflächen des stabförmigen Trägerteils 9 derart angeordnet sind, dass bei einer Bewegung des stabförmigen Trägerteils 9 durch die Gleitführung die Zähne oder Vorsprünge unter gleichzeitiger elastischer Auslenkung der Lamellen oder Rippen diese insbesondere kämmend passieren.

Insbesondere ist bei der exemplarischen Ausführungsform der erfindungsgemäßen Dämpfervorrichtung 1 gemäß FIG. 7 und FIG. 8 vorgesehen, dass ein Abstand zwischen den beiden einander gegenüberliegenden Lamellen-oder Rippenträgern 6 vorzugsweise variabel einstellbar ist, um einen Dämpfungsfaktor der Dämpfervorrichtung 1 einzustellen.

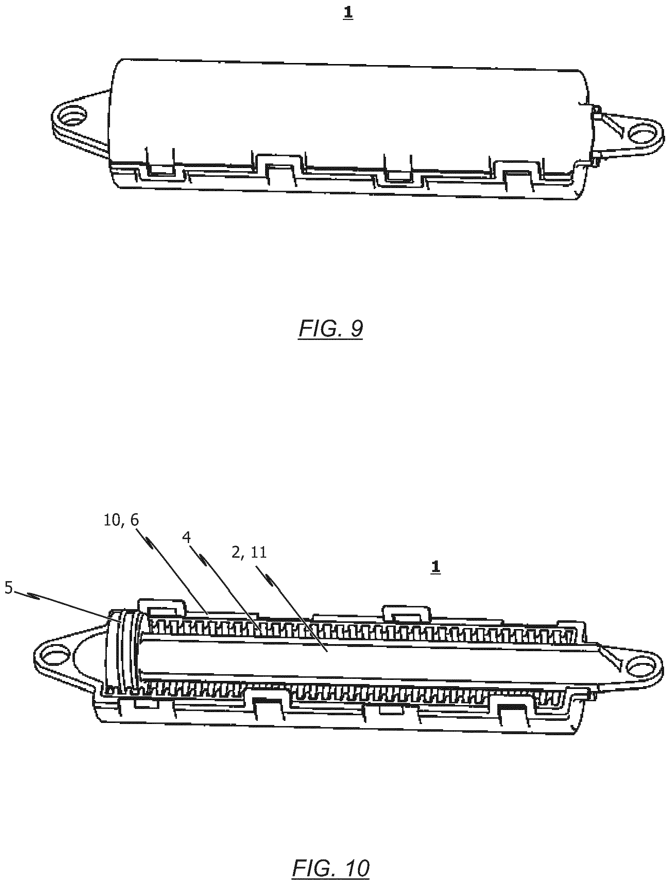

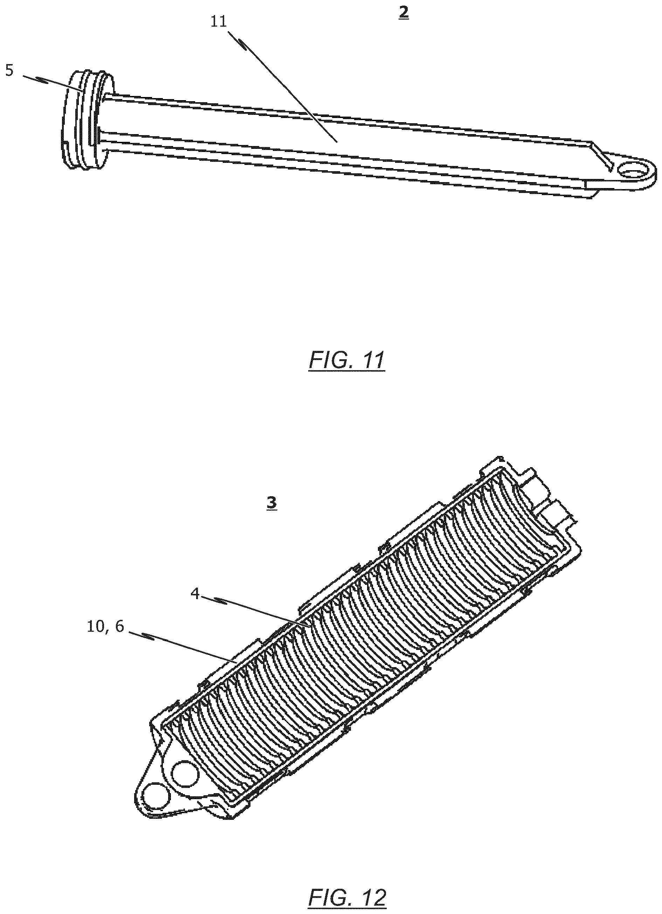

Bei der in FIG. 9 bis FIG. 12 schematisch gezeigten exemplarischen Ausführungsform der erfindungsgemäßen Dämpfervorrichtung 1 ist vorgesehen, dass die Dämpfervorrichtung 1 ebenfalls als Lineardämpfer ausgeführt ist, bei welcher die zweite Dämpferkomponente 3 als ein zylinderförmiges Gehäuseteil 10 mit einem im Querschnitt zumindest im Wesentlichen kreiszylinderförmigen Hohlraum ausgeführt ist.

Das Gehäuseteil 10 mit dem Hohlraum dient dabei als Lamellen- oder Rippenträger 6, mit oder an welchem die Lamellen oder Rippen der Lamellen-oder Rippenstruktur 4 verbunden oder ausgebildet sind.

Dabei ist insbesondere vorgesehen, dass die erste Dämpferkomponente 2 einen in den Hohlraum des zylinderförmigen Gehäuses 10 zumindest teil- oder bereichsweise eintauchenden Kolben 11 aufweist, welcher eine Kolbenstange aufweist, die einen ersten Endbereich aufweist, an welchem ein im Querschnitt zumindest im Wesentlichen kreiszylinderförmiges Trägerteil mit der Kammstruktur 5 angeordnet oder ausgebildet ist.

Ferner ist insbesondere vorgesehen, dass der Kolben 11 mit dem Trägerteil und der Kammstruktur 5 in Längsrichtung des zylinderförmigen Gehäuses 10 relativ zu dem zylinderförmigen Gehäuseteil 10 verschiebbar ist, während der mindestens eine Zahn oder Vorsprung der Kammstruktur 5 zumindest teil- und/oder bereichsweise kämmend zwischen zwei einander benachbarten Lamellen oder Rippen der Lamellen- oder Rippenstruktur 4 angeordnet ist.

Im Einzelnen ist vorgesehen, dass die beiden einander gegenüberliegenden Lamellen- oder Rippenträger 6 jeweils über eine sich schräg zur Bewegungsrichtung des stabförmigen Trägerteils verlaufende Führung relativ zu dem stabförmigen Trägerteil verschiebbar gelagert sind, und zwar insbesondere derart, dass bei einer Bewegung des stabförmigen Trägerteils in einer ersten Richtung durch die Gleitführung die beiden Lamellen- oder Rippenträger 6 in einer ersten Position vorliegen, und dass bei einer Bewegung des stabförmigen Trägerteils in einer zur ersten Richtung entgegengesetzten zweiten Richtung durch die Gleitführung die beiden Lamellen- oder Rippenträger 6 in eine zweite Position verschoben werden und/oder vorliegen, wobei in der zweiten Position der beiden Lamellen- oder Rippenträger 6 ein Abstand zwischen den beiden einander gegenüberliegenden Lamellen- oder Rippenträgern 6 größer ist als in der ersten Position der beiden Lamellen- oder Rippenträger 6.

Wie es insbesondere der Ansicht gemäß FIG. 10 entnommen werden kann, ist bei dieser exemplarischen Ausführungsform der erfindungsgemäßen Dämpfervorrichtung 1 insbesondere vorgesehen, dass der mindestens eine Zahn oder Vorsprung der Kammstruktur 5 als eine zumindest teil- oder bereichsweise auf der Mantelfläche des kreiszylinderförmigen Trägerteils ausgebildete schraubenförmige Struktur, insbesondere Helix-Struktur, ausgeführt ist.

Die Erfindung ist nicht auf die in den Zeichnungen gezeigten Ausführungsbeispiele beschränkt, sondern ergibt sich aus einer Zusammenschau sämtlicher hierin offenbarter Merkmale.

### Bezugszeichenliste

- 1: Dämpfervorrichtung
- 2: Dämpferkomponente
- 3: Dämpferkomponente
- 4: Lamellen- oder Rippenstruktur
- 5: Kammstruktur
- 6: Lamellen- oder Rippenträger
- 7: Gehäuseteil
- 8: innerer Muldenbereich
- 9: Trägerteil
- 10: zylinderförmiges Gehäuseteil
- 11: Kolben
- 12: Ringbereich
- 13: Lamellen- oder Rippenträger

## Patentansprüche

1. Dämpfervorrichtung (1) zum Reduzieren einer Bewegung eines relativ zu einem ersten Bauteil bewegbaren zweiten Bauteils, wobei die Dämpfervorrichtung (1) Folgendes aufweist:
- eine erste mit dem ersten Bauteil insbesondere fest verbundene oder verbindbare Dämpferkomponente (2);
- eine zweite mit dem zweiten Bauteil insbesondere fest verbundene oder verbindbare Dämpferkomponente (3), welche - zumindest teil-oder bereichsweise - relativ zu der ersten Dämpferkomponente (2) bewegbar ist; und
- einen Dämpfungsmechanismus, welcher derart zwischen der ersten und zweiten Dämpferkomponente (2, 3) angeordnet und ausgebildet ist, dass eine Bewegung der zweiten Dämpferkomponente (3) relativ zu der ersten Dämpferkomponente (2) reduziert wird oder reduzierbar ist,
**dadurch gekennzeichnet, dass**
der Dämpfungsmechanismus eine mit der ersten oder zweiten Dämpferkomponente (2; 3) verbundene Lamellen- oder Rippenstruktur (4) mit einer Vielzahl von vorspringenden Bereichen, insbesondere in Gestalt von Lamellen, Rippen oder Noppen, aufweist, die in der Bewegungsrichtung der ersten Dämpferkomponente (2) relativ zu der zweiten Dämpferkomponente (3) zumindest teil- oder bereichsweise elastisch auslenkbar sind; und dass
der Dämpfungsmechanismus eine mit der zweiten oder ersten Dämpferkomponente (3; 2) verbundene Kammstruktur (5) mit mindestens einem und vorzugsweise einer Vielzahl von Zähnen oder Vorsprüngen aufweist, wobei zumindest in einem Zustand, in welchem die zweite Dämpferkomponente (3) nicht relativ zu der ersten Dämpferkomponente (2) bewegt wird, der mindestens eine Zahn oder Vorsprung der Kammstruktur (5) zumindest teil- oder bereichsweise kämmend zwischen zwei einander benachbarten vorspringenden Bereichen der Lamellen- oder Rippenstruktur (4) angeordnet ist.

2. Dämpfervorrichtung (1) nach Anspruch 1,
wobei der mindestens eine Zahn oder Vorsprung der Kammstruktur (5) derart zwischen zwei einander benachbarten vorspringenden Bereichen der Lamellen- oder Rippenstruktur (4) angeordnet und/oder ausgebildet ist, dass bei einer Bewegung der ersten oder zweiten Dämpferkomponente (2; 3) relativ zu der zweiten oder ersten Dämpferkomponente (3; 2) mit Hilfe des mindestens einen Zahns oder Vorsprungs der Kammstruktur (5) zumindest ein Teil der vorspringenden Bereiche der Lamellen- oder Rippenstruktur (4) unter gleichzeitiger Umwandlung von Bewegungsenergie in elastische Verformungsarbeit elastisch verformt wird.

3. Dämpfervorrichtung (1) nach Anspruch 1 oder 2,
wobei der mindestens eine Zahn oder Vorsprung der Kammstruktur (5) aus einem relativ zu dem Material der vorspringenden Bereiche der Lamellen-oder Rippenstruktur (4) härteren Material, insbesondere Kunststoffmaterial, gebildet ist.

4. Dämpfervorrichtung (1) nach einem der Ansprüche 1 bis 3,
wobei die vorspringenden Bereiche der Lamellen- oder Rippenstruktur (4) eine - im Querschnitt der vorspringenden Bereiche gesehen - sich in Richtung der Kammstruktur (5) zumindest teil- oder bereichsweise verjüngende, insbesondere konisch verjüngende, Geometrie aufweisen; und/oder
wobei der mindestens eine Zahn oder Vorsprung der Kammstruktur (5) eine - im Querschnitt des mindestens einen Zahns oder Vorsprungs gesehen - sich in Richtung der Lamellen- oder Rippenstruktur (4) zumindest teil- oder bereichsweise verjüngende, insbesondere konisch verjüngende, Geometrie aufweist; und/oder
wobei der mindestens eine Zahn oder Vorsprung der Kammstruktur (5) eine Formgebung aufweist, die zumindest bereichsweise zumindest im Wesentlichen komplementär zu der Formgebung der vorspringenden Bereiche der Lamellen- oder Rippenstruktur (4) ist.

5. Dämpfervorrichtung (1) nach einem der Ansprüche 1 bis 4,
wobei die Lamellen- oder Rippenstruktur (4) einen mit der ersten oder zweiten Dämpferkomponente (3) insbesondere fest verbundenen oder verbindbaren Lamellen- oder Rippenträger (6) und die Vielzahl von mit dem Lamellen- oder Rippenträger (6) verbundenen vorspringenden Bereichen aufweist, wobei der Lamellen- oder Rippenträger (6) aus einem relativ zu dem Material der vorspringenden Bereiche härteren Material, insbesondere Kunststoffmaterial, gebildet ist, wobei die Lamellen- oder Rippenstruktur (4) vorzugsweise im Rahmen eines 2K-Kunststoffspritzgussprozesses gebildet ist.

6. Dämpfervorrichtung (1) nach einem der Ansprüche 1 bis 5,
wobei sich zumindest ein Teil der vorspringenden Bereiche der Lamellen-oder Rippenstruktur (4) im unbelasteten Zustand, insbesondere also in dem Zustand, in welchem die zweite Dämpferkomponente (3) nicht relativ zu der ersten Dämpferkomponente (2) bewegt wird, zumindest im Wesentlichen in eine Richtung erstreckt, welche zumindest im Wesentlichen senkrecht zu der Bewegungsrichtung der zweiten Dämpferkomponente (3) relativ zu der ersten Dämpferkomponente (2) verläuft; und/oder
wobei sich der mindestens eine Zahn oder Vorsprung der Kammstruktur (5) zumindest im Wesentlichen in eine Richtung erstreckt, welche zumindest im Wesentlichen senkrecht zu der Bewegungsrichtung der zweiten Dämpferkomponente (3) relativ zu der ersten Dämpferkomponente (2) verläuft.

7. Dämpfervorrichtung (1) nach einem der Ansprüche 1 bis 6,
wobei sich zumindest ein Teil der vorspringenden Bereiche der Lamellen-oder Rippenstruktur (4) im unbelasteten Zustand, insbesondere also in dem Zustand, in welchem die zweite Dämpferkomponente (3) nicht relativ zu der ersten Dämpferkomponente (2) bewegt wird, zumindest im Wesentlichen in eine Richtung erstreckt, welche im Hinblick auf eine Richtung, die senkrecht zu der Bewegungsrichtung der zweiten Dämpferkomponente (3) relativ zu der ersten Dämpferkomponente (2) verläuft, zumindest im Wesentlichen schräg verläuft.

8. Dämpfervorrichtung (1) nach einem der Ansprüche 1 bis 7,
wobei die Kammstruktur (5) derart ausgeführt ist, dass zwischen zwei benachbarten Zähnen oder Vorsprüngen der Kammstruktur (5) mehrere vorspringende Bereiche der Lamellen- oder Rippenstruktur (4) angeordnet sind; und/oder
wobei eine Anzahl der vorspringenden Bereiche der Lamellen- oder Rippenstruktur (4) zwischen zwei benachbarten Zähnen oder Vorsprüngen der Kammstruktur (5) oder eine Anzahl der Zähne oder Vorsprünge der Kammstruktur (5) zwischen zwei benachbarten vorspringenden Bereiche der Lamellen- oder Rippenstruktur (4) variiert.

9. Dämpfervorrichtung (1) nach einem der Ansprüche 1 bis 8,
wobei die erste und zweite Dämpferkomponente (3) jeweils modular aufgebaut ist, so dass insbesondere die Lamellen- oder Rippenstruktur (4) und/oder die Kammstruktur (5) bedarfsweise und insbesondere zum Variieren eines Ansprechverhaltens und/oder eines Dämpfungsfaktors der Dämpfervorrichtung (1) auswechselbar sind/ist.

10. Dämpfervorrichtung (1) nach einem der Ansprüche 1 bis 9,
wobei die Dämpfervorrichtung (1) als Rotationsdämpfer ausgeführt ist, bei welcher die erste Dämpferkomponente (2) als ein Gehäuseteil mit einem im Querschnitt zumindest im Wesentlichen kreiszylinderförmigen inneren Muldenbereich ausgeführt ist, wobei das Gehäuseteil mit dem inneren Muldenbereich (8) als Lamellen- oder Rippenträger (6) dient, mit oder an welchem die vorspringenden Bereiche der Lamellen- oder Rippenstruktur (4) verbunden oder ausgebildet sind, wobei die zweite Dämpferkomponente (3) ein im Querschnitt zumindest im Wesentlichen kreiszylinderförmiges Trägerteil (9) aufweist, welches die Kammstruktur (5) mit dem mindestens einen Zahn oder Vorsprung ausbildet und zumindest teil- oder bereichsweise in dem inneren Muldenbereich (8) der ersten Dämpferkomponente (2) derart vorzugsweise austauschbar aufgenommen ist, dass das Trägerteil (9) mit der Kammstruktur (5) relativ zu der ersten Dämpferkomponente (2) verdrehbar ist, während der mindestens eine Zahn oder Vorsprung der Kammstruktur (5) zumindest teil- und/oder bereichsweise kämmend zwischen zwei einander benachbarten vorspringenden Bereichen der Lamellen- oder Rippenstruktur (4) angeordnet ist.

11. Dämpfervorrichtung (1) nach einem der Ansprüche 1 bis 9,
wobei die Dämpfervorrichtung (1) als Rotationsdämpfer ausgeführt ist, bei welcher die erste Dämpferkomponente (2) als ein Gehäuseteil mit einem im Querschnitt zumindest im Wesentlichen kreiszylinderförmigen inneren Muldenbereich (8) ausgeführt ist, wobei das Gehäuseteil mit dem inneren Muldenbereich (8) als Trägerteil (9) dient, welches die Kammstruktur (5) mit dem mindestens einen Zahn oder Vorsprung ausbildet, wobei die zweite Dämpferkomponente (3) einen im Querschnitt zumindest im Wesentlichen kreiszylinderförmigen Lamellen- oder Rippenträger (6) aufweist, mit oder an welchem die vorspringenden Bereiche der Lamellen-oder Rippenstruktur (4) verbunden oder ausgebildet sind, wobei der kreiszylinderförmiger Lamellen- oder Rippenträger (6) mit der Lamellen-oder Rippenstruktur (4) zumindest teil- oder bereichsweise in dem inneren Muldenbereich (8) der ersten Dämpferkomponente (2) derart vorzugsweise austauschbar aufgenommen ist, dass das Trägerteil (9) mit der Kammstruktur (5) relativ zu der ersten Dämpferkomponente (2) verdrehbar ist, während der mindestens eine Zahn oder Vorsprung der Kammstruktur (5) zumindest teil- und/oder bereichsweise kämmend zwischen zwei einander benachbarten vorspringenden Bereichen der Lamellen- oder Rippenstruktur (4) angeordnet ist.

12. Dämpfervorrichtung (1) nach Anspruch 11,
wobei die erste Dämpferkomponente (2) einen kreisförmigen Ringbereich (12) aufweist, welcher derart in dem kreiszylinderförmigen inneren Muldenbereich (8) ausgebildet ist, dass der innere Muldenbereich (8) in einen äußeren Ringkanal und einen hiervon über den Ringbereich (12) getrennten im Querschnitt kreisförmigen Bereich aufgeteilt ist, wobei die Zähne oder Vorsprünge der Kammstruktur (5) an der den äußeren Ringkanal begrenzenden Wandung und an der nach Innen zeigenden Wandung des Ringbereichs (12) ausgebildet sind, und wobei die zweite Dämpferkomponente (3) ferner einen ringförmigen Lamellen- oder Rippenträger (13) aufweist, welcher derart komplementär zu dem äußeren Ringkanal der ersten Dämpferkomponente (2) ausgeführt ist, dass der ringförmige Lamellen- oder Rippenträger (6) zumindest teil- oder bereichsweise in dem äußeren Ringkanal der ersten Dämpferkomponente (2) aufnehmbar ist, wobei beidseitig mit oder an dem ringförmigen Lamellen- oder Rippenträger (6) vorspringende Bereiche der Lamellen-oder Rippenstruktur (4) verbunden oder ausgebildet sind.

13. Dämpfervorrichtung (1) nach einem der Ansprüche 1 bis 9,
wobei die Dämpfervorrichtung (1) als Lineardämpfer ausgeführt ist, bei welcher die erste Dämpferkomponente als ein zylinderförmiges Gehäuseteil (10) mit einem im Querschnitt zumindest im Wesentlichen kreiszylinderförmigen Hohlraum ausgeführt ist, wobei das Gehäuseteil (10) mit dem Hohlraum als Lamellen- oder Rippenträger (6) dient, mit oder an welchem die vorspringenden Bereiche der Lamellen- oder Rippenstruktur (4) verbunden oder ausgebildet sind, wobei die zweite Dämpferkomponente (3) einen in den Hohlraum des zylinderförmigen Gehäuseteils (10) zumindest teil- oder bereichsweise eintauchenden Kolben (11) aufweist, welcher eine Kolbenstange aufweist, die einen ersten Endbereich aufweist, an welchem ein im Querschnitt zumindest im Wesentlichen kreiszylinderförmiges Trägerteil (9) mit der Kammstruktur (5) angeordnet oder ausgebildet ist, wobei der Kolben (11) mit dem Trägerteil (9) und der Kammstruktur (5) in Längsrichtung des zylinderförmigen Gehäuseteils (10) relativ zu dem zylinderförmigen Gehäuseteil (10) verschiebbar ist, während der mindestens eine Zahn oder Vorsprung der Kammstruktur (5) zumindest teil- und/oder bereichsweise kämmend zwischen zwei einander benachbarten vorspringenden Bereichen der Lamellen- oder Rippenstruktur (4) angeordnet ist, wobei der mindestens eine Zahn oder Vorsprung der Kammstruktur (5) vorzugsweise als eine zumindest teil- oder bereichsweise auf der Mantelfläche des kreiszylinderförmigen Trägerteils ausgebildete schraubenförmige Struktur, insbesondere Helix-Struktur, ausgeführt ist.

14. Dämpfervorrichtung (1) nach einem der Ansprüche 1 bis 9,
wobei die Dämpfervorrichtung (1) als Lineardämpfer ausgeführt ist, bei welcher die erste Dämpferkomponente zwei einander gegenüberliegende Lamellen- oder Rippenträger (6) aufweist, welche ausgeführt sind, für ein stabförmiges Trägerteil (9) der zweiten Dämpferkomponente (3) eine vorzugsweise formschlüssige und noch bevorzugter zumindest teil- oder bereichsweise formschlüssige, die Translation erlaubende Gleitführung auszubilden, wobei jeder Lamellen- oder Rippenträger (6) der ersten Dämpferkomponente (2) eine Lamellen- oder Rippenstruktur (4) mit einer Vielzahl von vorspringenden Bereichen aufweist, und wobei das stabförmige Trägerteil (9) der zweiten Dämpferkomponente (3) eine Kammstruktur (5) mit einer Vielzahl von Zähnen oder Vorsprüngen aufweist, die an einander gegenüberliegenden Seitenflächen des stabförmigen Trägerteils derart angeordnet sind, dass bei einer Bewegung des stabförmigen Trägerteils durch die Gleitführung die Zähne oder Vorsprünge unter gleichzeitiger elastischer Auslenkung der vorspringenden Bereiche diese insbesondere kämmend passieren.

15. Dämpfervorrichtung (1) nach Anspruch 14,
wobei ein Abstand zwischen den beiden einander gegenüberliegenden Lamellen- oder Rippenträgern (6) vorzugsweise variabel einstellbar ist zum Definieren eines Dämpfungsfaktors der Dämpfervorrichtung (1); und/oder
wobei mindestens einer der beiden einander gegenüberliegenden Lamellen-oder Rippenträger (6) über eine sich schräg zur Bewegungsrichtung des stabförmigen Trägerteils verlaufende Führung relativ zu dem stabförmigen Trägerteil verschiebbar gelagert ist, und zwar insbesondere derart, dass bei einer Bewegung des stabförmigen Trägerteils in einer ersten Richtung durch die Gleitführung der mindestens eine Lamellen- oder Rippenträger (6) in einer ersten Position vorliegt, und dass bei einer Bewegung des stabförmigen Trägerteils in einer zur ersten Richtung entgegengesetzten zweiten Richtung durch die Gleitführung der mindestens eine Lamellen-oder Rippenträger (6) in eine zweite Position verschoben wird und/oder vorliegt, wobei in der zweiten Position des mindestens einen Lamellen-oder Rippenträgers (6) ein Abstand zwischen den beiden einander gegenüberliegenden Lamellen- oder Rippenträgern (6) größer ist als in der ersten Position des mindestens einen Lamellen- oder Rippenträgers (6).
